# EUROPEAN PATENT SPECIFICATION

(11) **EP 1 676 457 B1**
(45) Date of publication and mention of the grant of the patent: **27.06.2012**
(21) Application number: 04775455.1
(22) Date of filing: 23.09.2004
(51) Int. Cl.: H04W 64/00, H04W 88/08

(54) **RADIO ACCESS STATION, RADIO ACCESS NETWORK AND METHOD**
FUNKZUGANGSSTATION, FUNKZUGANGSNETZWERK UND VERFAHREN
STATION D'ACCÈS RADIO, RÉSEAU D'ACCÈS RADIO ET PROCÉDÉ

(30) Priority: 20.10.2003 SE 0302804; 17.02.2004 SE 0400388
(43) Date of publication of application: 05.07.2006
(73) Proprietor: TELEFONAKTIEBOLAGET LM ERICSSON (publ), 164 83 Stockholm (SE)
(72) Inventor: BOHLIN, Johan, S-756 43 Uppsala (SE); KANGAS, Ari, S-181 30 Lidingö (SE)
(74) Representative: Egrelius, Fredrik
(86) International application number: PCT/SE2004/001353
(87) International publication number: WO 2005/039215

(56) References cited:
- EP-A- 1 109 416
- WO-A1-01/01714
- WO-A1-92/02104

## Description

### TECHNICAL FIELD

The present invention relates in general to cellular communications networks, and in particular to such networks having geographically small cells.

### BACKGROUND

The possibility to determine the position of a mobile device has enabled application developers and wireless network operators to provide location based, and location aware, services. Examples of those are guiding systems, shopping assistance, friend finder and other information services giving the mobile user information about their surroundings.

In addition to the commercial services, the governments in several countries have also put requirements on the network operators to be able to determine the position of an emergency call. For instance, the governmental requirements in USA (FCC E911) requires that it must be possible to determine the position of a certain percentage of all emergency calls. There is no difference between the requirements put on indoor environments compared to outdoor environments.

In outdoor environments, the position estimation can be done using external methods for position determination, e.g. GPS (Global Positioning System) based methods like Assisted-GPS (A-GPS). Position estimation can also be performed using the wireless network itself. Methods using the wireless network can be grouped in two main groups. The first group comprises methods that are based on the radio cell to which a mobile terminal is attached, e.g. by using Cell-ID or E-CGI (Enhanced Cell Global Identity). The second group uses measuring of radio signals from several base stations (BS) and determining the terminal position using e.g. Time Difference (TD).

In order to be able to connect to a mobile network or to perform handover when connected, a mobile terminal typically constantly measures available signals, not only from the own base station, but also from other base stations. These signals are typically control signals intended for measuring radio conditions of transmissions, which control signals contain, among other data, information about how to establish a connection to the transmitting base station. In particular, the control signals comprise data, which by itself or in combination with the frequency of the carrier on which the control signal was transmitted constitute base station identification data. A mobile terminal can thus obtain an identity of the transmitting base station and an estimate of the radio conditions. The mobile terminal typically compiles this information, in GSM (Global System for Mobile communications) in a neighbour list, which is transferred to the network as information.

Position estimation can be based on measurements in the neighbour list. One then uses the relation between the distance from the radio base station and the radio condition in combination with knowledge about the exact position of the base station. The base station positions are known within the communications network. This means that the neighbour list easily can be used for position estimating according to different algorithms. The accuracy of the position estimation is generally proportional to the size of the cell.

Triangulations, or Time Difference (TD) methods, use signals associated with two or more different base stations. These signals are used to calculate the position or at what distance from the base station a mobile terminal is located. The calculations are based on the relative or absolute difference in the time it takes the signal to propagate between the terminal and the different base stations. The achievable accuracy of TD-methods depends on system architecture, physical conditions and radio conditions. Typically, the accuracy of a TD method in a mobile telephony system is 50 to 150 meters. TD methods are also relatively time and resource consuming.

Fingerprinting methods use the fact that all places have a, more or less, unique characteristic signature of the received radio signals. This is the result of multi-pathing and reflections in the buildings and obstacles. By storing the characteristic radio signature of different locations in a database, it is possible determine the location of a device by comparing the received signature of a signal with the signatures stored in the database. Fingerprinting methods requires an always-updated database. A good result typically also relies on being able to match signals from several different sources or base stations.

A terminal located indoors typically has a connection to a base station covering the surrounding outdoor area that is of lower quality than if the terminal would have been located outdoors. To improve the indoor coverage situation, many larger buildings are equipped with indoors mobile telephony system. The indoor system most often consists of one base station and a distributed antenna system or a leaking cable antenna. For building spread over large areas repeaters are typically used. This results in that the entire building appears as one large radio cell and that it is impossible to determine where the terminal is located within the building. Furthermore, due to weak signals from base stations located outdoors, more sophisticated methods using e.g. triangulation is normally impossible to apply.

WO-92/02104 describes a cellular radio system in which a plurality of base stations each having a radio transceiver, provide radio coverage over a respective radio coverage area. Identification transmitters repeatedly transmit an identification signal over an identified radio coverage area which is at least partially within one of the said radio coverage areas, so that a mobile station (6) having a radio transceiver can communicate with one of the base stations, and upon receipt of the identification signal the mobile station can be determination to be within the said identified radio coverage of the identification transmitter.

WO-01/01714 discloses that time periods and locations in which the use of a mobile telephone is undesirable are defined for mobile telephones. The mobile radio system constantly monitors whether said time periods and locations during which the mobile telephone is not to be used have been reached and, if this is the case, initiates an action so that the mobile telephone cannot be used. According to the simplest scenario, a request for disconnection is issued. In the most extreme case, the mobile telephone is automatically switched off. When the mobile telephone is not to be used in a given location, the mobile radio system constantly monitors the position of said mobile telephone within said mobile radio system.

In EP-1109416 a wireless mobility server (WMS) presents the appearance of a single MSC/VLR to the ANSI-41 signaling network within a cellular network. WMS hides from a Call Server (CS) the fact that one or more of the terminals in a call are wireless and mobile; thereby enabling utilization of an other-than-MSC-derived CS. Operating in support of WMS is a Terminal Proxy (TP) which effectively hides the radio technology-specific operational details of the radio access network from the WMS.

One straightforward solution is to use an additional system for positioning, a system that is not based on any mobile telephony system. This can be an indoor GPS system, a WLAN (Wireless Local Area Network) or a Bluetooth based system or some other sensor solution. However, such systems require additional complex equipment and also the terminals have to be equipped with special hardware and/or software, which makes the solution expensive.

Another straightforward solution is to increase the number of indoors base stations, thus reducing the size of the cells. Such a solution will also increase the totally available communication resources, since there typically appears possibilities for more efficient reuse of communication resources. However, a base station is an expensive piece of equipment and such a solution will therefore become very costly. Furthermore, the introduction of smaller cells will increase the number of handovers that are necessary, since there is an increased probability that a mobile terminal crosses cell borders. By introducing very small cells, necessary for accurate positioning, the number of handovers will increase enormously. Consequently, the load on the BSC's or RNC's that are connected to handle the handover procedures will also increase enormously.

In some applications, introduction of a layered cell structures with a layer macro cells and a layer of micro cells, helps in solving the problems of frequent handovers. Mobile terminals that moves relatively fast are allocated to the macro cells and slowly moving or quasi-stationary mobile terminals can be allocated to the micro cells. In this way more accurate position estimations can be performed for the slowly moving terminals. However, the introduction of macro and micro cell layers requires additional communication channels since macro and micro cells in a general case cannot use the same communication channels. Furthermore, the efforts for managing such layered structures are large, both concerning hardware and software requirements. Finally, accurate position determination of fast mobile terminals is still not possible.

In certain situations, it is requested to have an accurate position determination for purposes of local character. For instance, in a large office building or production facility, it would be possible to find the present location of any employees, if they carry a mobile terminal. This could be most beneficial for the office or facility management, but for a network operator, a location determination of "within a specific building" would be sufficient. Furthermore, some location data within e.g. a building could reveal e.g. company secrets. It is therefore in many cases required having accurate position estimation, but that is not generally available for the entire communications network, except for e.g. emergency situations. In prior art, there are no such possibilities for selective access to positioning information.

### SUMMARY

A problem with prior art is that there is a difficulty to increase position estimation accuracy without significantly increase signalling traffic to radio access station controllers or managing efforts of layered cell structures. Another problem with prior art is that there are no possibilities to make position estimations selectively available for different network parties.

An object of the present invention is to provide methods and devices for improved position estimation accuracy. A further object of the present invention is to provide such methods and devices that do not increase the traffic load on radio access station controllers. Yet an object of the present invention is to provide methods and devices making position estimation information selectively available for different communications network parties and/or for a certain local area. Another object is to provide methods and devices which enhances the control possibilities for a local party, e.g. a building owner, over the radio network in a corresponding local area.

The above objects are achieved by methods and devices according to the enclosed patent claims. In general words, a virtual network is created by providing antennas controlled by the same radio access station with control signals of antennas. A virtual network controller is arranged for performing handovers between sets of physical channels of the different antennas. The handover is preferably performed transparently towards the main communication network. This transparency is preferably provided by associating physical channels of antennas with communication channels of the main communications network. Preferably, position estimations are performed by the network controller, whereby such estimations can be kept secret within the virtual network.

The advantages with the present invention are that the virtual network can be managed partly separately from the main communication network. The amount of handover-related traffic between the radio access station and the radio access station controller can be reduced significantly. Furthermore, the handovers and position determinations utilising antennas can be kept secret within the virtual network.

### BRIEF DESCRIPTION OF THE DRAWINGS

The invention, together with further objects and advantages thereof, may best be understood by making reference to the following description taken together with the accompanying drawings, in which:
FIG. 1A is a schematic illustration of a cellular communications system;
FIG. 1B is a block scheme of connecting network elements in a cellular communications system;
FIG. 2 is an illustration of the typical content of a neighbour list;
FIG. 3 is a schematic illustration of a distributed antenna system according to prior art;
FIG. 4 is a schematic illustration of a part of a radio network according to an embodiment of the present invention;
FIG. 5 is a schematic illustration of a part of a radio network having a distributed antenna system according to an embodiment of the present invention;
FIGS. 6A and 6B are schematic illustrations of a translation functionality of a virtual network controller according to an embodiment of the present invention in control and data plane, respectively;
FIGS. 7A and 7B are schematic illustrations of other virtual network controller embodiments according to the present invention;
FIG. 7C is a schematic illustration of reuse of carriers in an embodiment of a virtual cellular network according to the present invention;
FIG. 8 is a block scheme of an embodiment of a radio base station according to the present invention;
FIG. 9 is a block scheme of another embodiment of a radio base station according to the present invention;
FIG. 10 is an illustration of a translation between internal and external neighbour lists;
FIGS 11A-C are cell plans of virtual networks according to the present invention; and
FIG. 12 is a flow diagram illustrating the main steps in an embodiment of a method according to the present invention.

### DETAILED DESCRIPTION

In order to fully understand the operation of the present invention, first a short review of control signalling and general position estimations in cellular networks is given.

In the main part of the detailed description, systems based on GSM technology are used as exemplifying embodiments. However, the basic ideas of the present invention are not limited to the specific described embodiments, but are generally applicable to many different cellular communication systems.

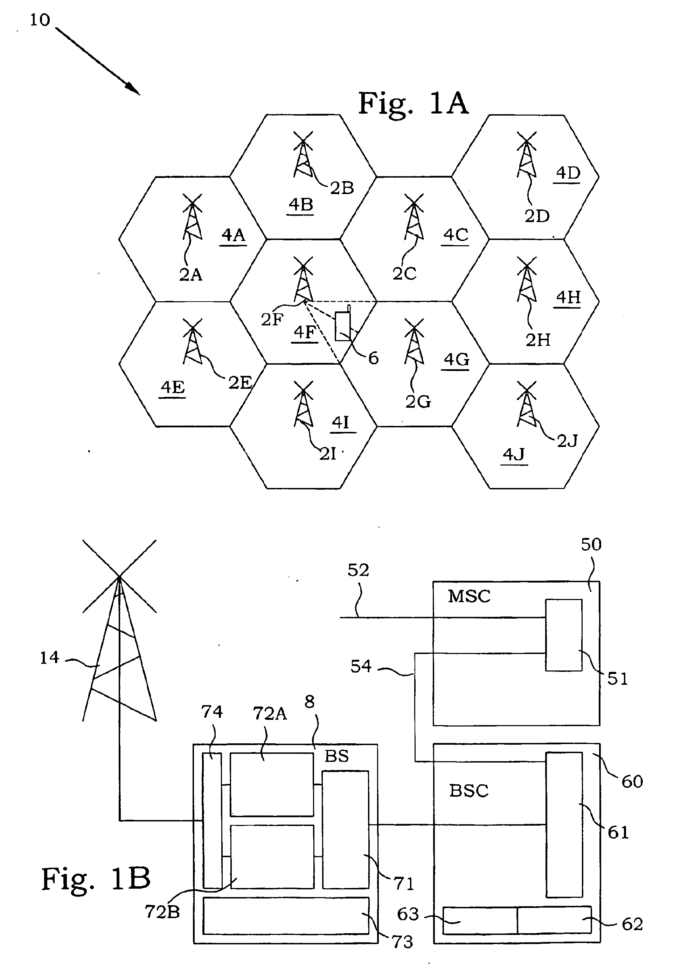

The basic idea with cellular networks 10, one of which is schematically illustrated in Fig. 1A, is to structure the network as a grid of cells 4A-J where each cell 4A-J is the area covered by one radio base station 2A-J. The communication takes place via different radio resources. To avoid interference between mobile phones 6 and radio base stations 2A-J in neighbouring cells, the communication between the mobile phone 6 and the base station 2A-J uses different resources or communication channels, i.e. slightly different configurations or settings, e.g. of frequencies or codes. The number of those resources or "configurations" is limited. In GSM systems, the resources are formed by a limited number of allowed carrier frequencies, and they are used to separate communication in different cells. In WCDMA (Wideband Code Division Multiple Access) systems, the resources are characterised by a limited number of different codes. The result of the limited number of radio resources means that it is important to plan the network 10 carefully.

Mobile Station (MS), Mobile Phone, Mobile Terminal and Handset all refers to the device that is movable within area covered the communications system. These terms will be used in the present disclosure as equivalent expressions. This device is typically a mobile telephone, hand held computer so-called Personal Digital Assistance (PDA) or other device or apparatus equipped with a radio receiver for cellular or mobile networks.

In Fig. 1B, a block scheme of network elements in a GSM network is illustrated. An MSC (Mobile services Switching Centre) 50 is connected to other MSC's and to other external networks 52, typically via a (not shown) GMSC (Gateway MSC). The MSC 50 is connected to one ore more BSC's (Base Station Controllers) 60, and has switching means 51 for connecting different network elements connected thereto. The BSC 60 is responsible for handling one or more base stations 8, and switches traffic to and from the MSC 50 and different base stations 8 by switching functionalities 61. The BSC 60 has also means 62 for conducting handovers and means 63 for performing estimations of positions of mobile terminals connected to the base stations 8, e.g. by utilising neighbour lists reported by the mobile terminals. Alternatively, the means 63 for estimating positions can be arranged for reporting information associated with position determination to another node in the network, where the actual estimation is performed. The base station 8 comprises a transceiver radio interface 71, which divides traffic of the different channel frequencies to transceiver units 72A, 72B. The output of the transceivers 72A, 72B are multiplexed by a multiplexor 74 and sent to an antenna 14. The functions in the base station 8 are controlled by a base station control system 73.

Communication using cellular communications systems typically involves data signals and control signals sent on traffic channels and control channels, respectively. In a GSM system, there are three classes of control channels. BCH (Broadcast Channel) comprises channels on which information about the cell and network parameters continuously are transmitted to the mobile terminals. For instance, the channel BCCH (Broadcast Control CHannel) is used for sending cell specific information. Communication on channels of the BCH takes place in the DL (DownLink) direction. The BCH data is provided by the base station 8.

Other control channels are used for paging purposes, access functionalities and signalling between network and mobile terminal before and during calls. Such control signalling is e.g. used by the mobile terminals to inform the network about e.g. measurements of neighbour transmitters. Also signalling concerning authentication are performed by such control signalling. For CCCH (Common Control Channels) and DCCH (Dedicated Control Channels), the information is typically provided from or to a BSC or MSC and is only relayed through the base station.

Returning to Fig. 1A, in most cellular networks 10, the mobile terminal 6 continuously measures the receiving conditions of the radio signals. The reasons are several. One is to be able to modify the transmission power in order to avoid sending on unnecessary high transmission power. In general, but not necessarily, the radio base station with the best radio conditions is the one used for connection to the cellular network. The base station with the best radio conditions is in most cases also the one that is located closest to the mobile telephone 6. In Fig. 1A, the mobile telephone 6 is connected via base station 2F. The mobile telephone 6 is thus located within the cell 4F of that particular base station 2F. The radio cell is defined as the area surrounding a base station, in which the base station is the base station with the best radio connection to a mobile telephone. Since the positions of the transmission points associated with the base stations are known by the cellular network, the identity of the base station with the best radio conditions hence also gives an approximate location estimate of the mobile telephone. The size of a cell is proportional to the density of base stations. In Fig. 1A, one may therefore conclude that mobile telephone 6 is present within cell 4F.

In order to know which base station to connect to, the mobile telephones constantly measures signals sent also from other base stations. These signals are special control signals intended for measuring the radio conditions between the mobile telephone and the base stations. The signals contain, among other data, information about how to establish a connection to the base station sending the signal. As mentioned above, the communications in neighbouring cells are done over links with slightly different configurations in order to avoid interference. The control signals are typically transmitted using those different configurations. As an example, in GSM, the control signal from one base station is sent on a different frequency than the control signal sent from the neighbouring base station. However, base stations further away could use the same frequency in a reuse pattern. To be able to separate the base stations associated with different cells, but that are sending control signals on the same frequency, from each other, the control signals also contain other information making it possible to distinguish a control signal from one base station from the other. This information, alone or in combination with the frequency of the control signal, gives a possibility to identify a particular base station. In other words, the control signals comprise base station identification data. In GSM, so-called colour codes are used to separate different base stations from each other.

The network typically informs the mobile terminal about which base stations that are present in the vicinity. The mobile telephone then knows what control signals to look for. The mobile telephone may also measure signals from each other base stations if the information to be measured is not accessible. This could be the case e.g. in areas where a user's operator has no coverage, but other operators have. The results of the measurements of the control signals sent from the base stations are typically stored in the mobile terminal in a compiled manner. Such a list of neighbouring base stations or at least data corresponding to such a list is kept updated in the mobile terminal, and often referred to as the neighbour list.

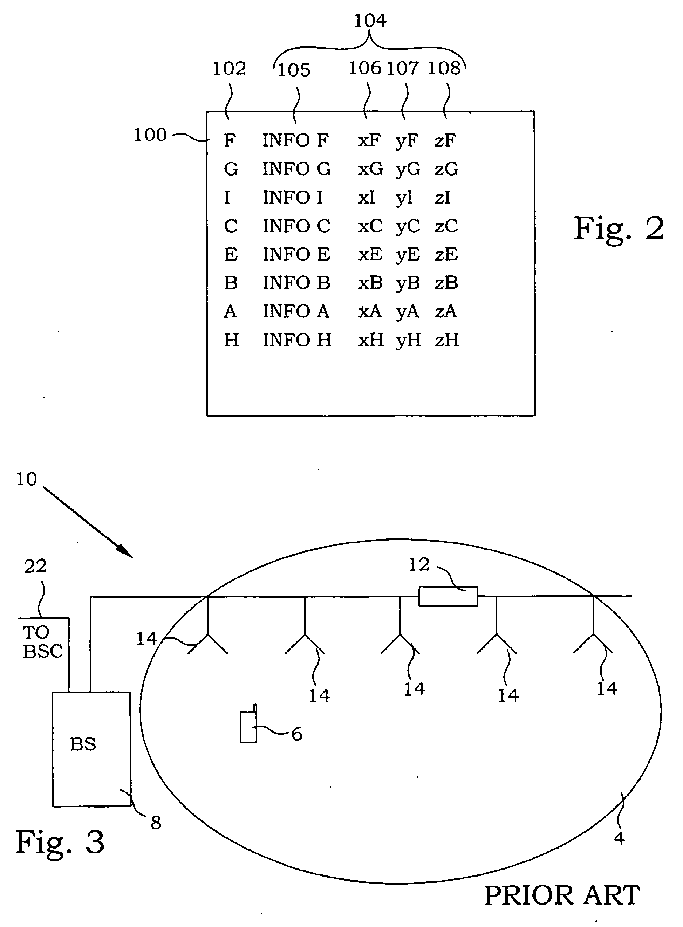

An example of such a neighbour list for the situation of Fig. 1A is illustrated in Fig. 2. The list is sorted based on the quality of the radio conditions, with the base stations having the best radio conditions on top of the list. Each row 100 of the list refers to one particular base station. In this example, the first column 102 comprises an identity of the base station. A second portion 104 comprises additional information. In the present embodiment, a second column 105 comprises general information. The third to fifth columns 106-108 comprise data associated with e.g. measures of the quality of the radio conditions to each base station, signal quality, barring flags or similar data important for handover decisions.

The measurements of such a list are continuously transferred to the base station to keep the network updated regarding radio conditions. The base station, or any network server connected to it can thereby retrieve the content of a neighbour list of any connected mobile terminal.

In the present disclosure, the expressions "position" and "location" will be used. Position is intended to mean a geographical position given as coordinates or degrees (e.g. the WGS-84 datum). It may also contain orientation and/or heading, speed, acceleration etc. A position may also be given as a relative measure. The location is a more subjective position defined by the type of (or relation to) facility or place. Examples of locations are: "military area/facility", "hospital", "office", "theatre", "near emergency exit". The expression "location" is assumed to comprise also what is comprised by "position".

The most trivial position estimation is to determine the approximate position as inside the cell of the base station with best radio connection with the mobile terminal, i.e. the base station at the top of the neighbour list. In Fig. 1A, this means that it is possible to conclude with a certain probability that the mobile telephone 6 is situated within cell 4F. Using several entries in the neighbour list for different algorithms means that a better accuracy than the cell where the mobile phone is camping can be calculated. In Fig. 2, it is seen that base station 2G has the second position in the neighbour list. It is then very probable that the mobile telephone is situated in a 60° sector facing the cell 4G, marked with broken lines in Fig. 1A. Furthermore, since base station 2I is the third entry in the neighbour list, it is also probable that the mobile terminal 6 is situated in the half of the sector that is closest to cell 4I. Additional accuracy can furthermore be achieved by considering e.g. signal strength ratios etc.

The translation or calculation translating the neighbour list to a position and/or location estimate may take place either in the cellular system or in the terminal. If the position estimation takes place in the system, e.g. in a network server, the mobile terminal has to transmit the neighbour list or measurements corresponding to it to the radio base station. If the mobile terminal itself performs the estimation, the estimation can in a basic concept e.g. comprise a determination of a closest base station in form of e.g. a cell-ID. Such position information can in certain cases be enough to support many of the services based on position determination. However, if the actual geographic position is to be estimated, the mobile terminal first needs information about the particular surroundings. Such information should contain at least the known positions of the different base stations and could e.g. be deduced from instructions concerning base stations to be measured. Other information that may be specific to the location, building or surroundings may also be useful. Such specific information about e.g. a specific building could comprise map information, from which it is possible to exclude certain areas where a mobile cannot be located from the position determination. It is e.g. obvious that a mobile terminal can not be located within a solid wall, and it is most likely that the mobile is not hovering in the air 10 metres above the floor.

Indoors coverage in cellular systems is often of a lower quality than outdoors. Therefore, many larger buildings have their own local cell or cells. A typical prior art system is illustrated in Fig. 3. One single base station 8 serves a distributed antenna system comprising a number of antennas 14 distributed over the indoors area. A repeater 12 can be present in order to enhance the signals during distribution. Since all antennas provides the same information, a mobile terminal 6 experiences all antennas 14 together as one transmitting system, being associated with one single cell 4. Furthermore, since the mobile terminal 6 is unaware of which antenna it is actually communicating with, refined position estimation as described above is less likely to operate well. One way to improve position estimation accuracy is to provide smaller cells.

Distributed antenna systems as well as leaking cable systems and subsystems that are fed by a repeater or any other active component are assumed to be particularly well suited for implementing the present invention. The term "antenna" is normally used both for an antenna in a distributed antenna system, but also for a section of a leaking cable on a leaking cable antenna. However, the present invention is applicable to all possible types of antenna systems.

The typically bad connections to the base stations for the outdoor coverage, in combination with an environment with a lot of fading, also makes it difficult or even impossible to use base stations located outdoors for triangulation purposes. In some buildings that are spread over large areas (e.g. airports), repeaters are used. The cell then becomes even larger resulting in that the area in which the mobile phone is when connected to that cell is very large, i.e. the position estimation accuracy is low.

The accuracy of position estimation based on neighbour lists is basically proportional to the cell size. Smaller cells will in general enable more accurate and precise position estimations. However, cells are controlled by a base station, and base stations are generally very expensive. The functionalities required in a base station that are used for position estimation are, at least in methods where the base station not actively takes part in the positioning, very limited. In fact, if only control signals comprising base station identification data is transmitted from well-defined positions, this is enough for performing the positioning routines.

As mentioned above, the present invention is applicable to most cellular communications networks. However, as also mentioned above, it is presently believed that it is particularly advantageous when applied to position estimation of mobile terminals located in a distributed antenna system, a leaking cable system or a sub-system fed by a repeater. The accuracy of the position determination method according to the invention depends on e.g. the premises or environment where the invention is to be implemented and other pre-requisites as well as various customer requirements. However, a position accuracy of 20-50 meters is believed to be realistic. The present invention could advantageously be used for positioning of mobile terminals located in indoors systems, underground railway systems (subways) and sub-systems connected to cellular macro systems, e.g. tunnels connected to a macro radio cell using a repeater.

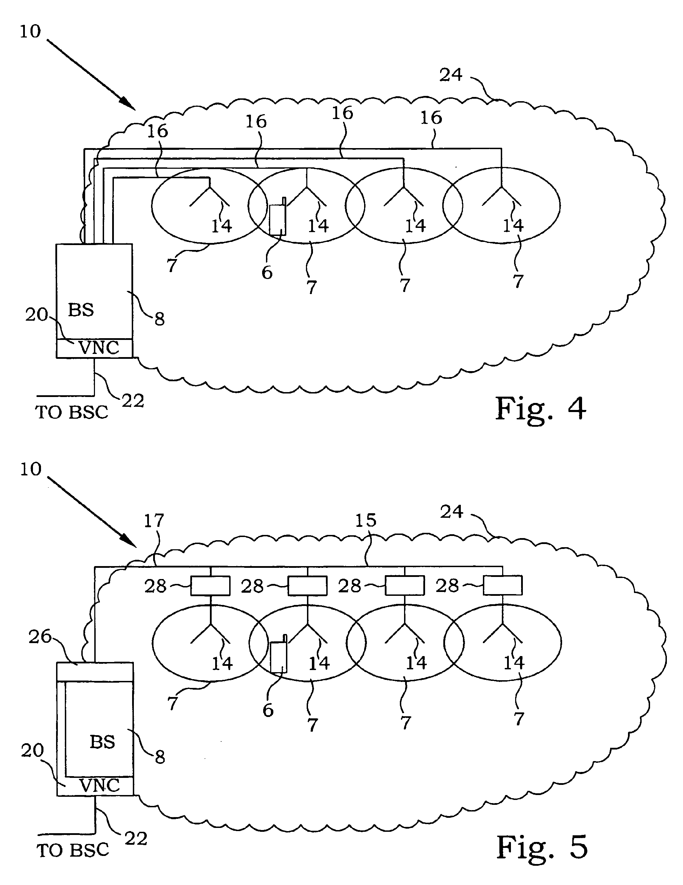

The basic concept of the invention is to divide a larger cell into several smaller virtual cells. The virtual cells are virtual in the sense that they are not known, or at least not completely known, by the macro network. The virtual cells together constitute a local virtual cellular network, controlled by a base station having a VNC (Virtual Network Controller). Much of the intelligence to handle the connections to the mobile telephones that usually is performed in the network components such as the BSC in GSM or the RNC (Radio Network Controller) in WCDMA, is comprised in the VNC. An embodiment of a radio network according to the present invention is schematically illustrated in Fig. 4. Here, four antennas 14 are connected to a base station 8 by separate antenna cables 16. Each antenna 14 transmits control signals with separate virtual base station identification data on different broadcast channels, and each antenna 14 constitutes the centre of a virtual cell 7 in a local virtual cellular network 24. The base station 8 is further connected to a BSC via a connection 22. The base station 8 comprises, physically and/or logically, a VNC 20.

The VNC 20 comprises according to the present invention functionalities for handling intra-virtual-network handovers. If a mobile terminal 6 moves from one virtual cell 7 to another, the VNC 20 has the full responsibility for handling a handover between channels available at corresponding antennas 14.

The mobile terminal 6 experiences the virtual cells 7 as normal cells in a normal cellular network, and do not notice the existence of a VNC 20. The mobile terminal 6 therefore provides measurements on neighbouring control channels just as in a normal cellular network, and reports such measurements to the communications network. However, according to the present invention, some of the information provided by the mobile terminal 6 is terminated in the VNC 20, or at least monitored and if suitable forwarded to the BSC.

In a preferred embodiment of the present invention, the VNC terminates any information having connection with the local virtual cellular network 24. This means that the BSC controlling the base station 8 and the rest of the cellular network doesn't experience the virtual cells at all. From the main network point of view, the base station 8 and VNC 20 operates as a base station of a single cell.

The division of one cell into several virtual cells 7 of a virtual network 24 leads to that the mobile terminal 6 is provided with more exact information about its actual location. The control signalling from each of the antennas 14 can be measured and provide a base for a more accurate position determination. At the same time, the main communications network is not bothered by the increased cell division, or at least to a very low degree. The assumed increased need for handovers within the virtual network 24 is handled internally, i.e. by the VNC and the BSC only takes care of handovers from the virtual network 24 to any other external cell and from any other external cell to the virtual network 24. In a preferred embodiment, the BSC doesn't even know about the existence of the virtual cells 7.

When creating a virtual cellular network 24 as in Fig. 4, a number of new antennas have typically to be provided. However, if the ideas according to the present invention are implemented in e.g. a distributed antenna system, the already existing antennas can be utilised. In Fig. 5 an embodiment of the present invention having a distributed antenna system is schematically illustrated. Four antennas 14 of a distributed antenna system 15 are connected by a common antenna cable 17 to the base station 8. As above, each antenna 14 transmits control signals with separate virtual base station identification data on different broadcast channels, and each antenna 14 constitutes the centre of a virtual cell 7 in a local virtual cellular network 24. The base station 8 is further connected to a BSC via a connection 22. The base station 8 comprises, physically and/or logically, a VNC 20. In the present embodiment, the VNC 20 also comprises a signal injector 26, which multiplexes control signals to all antennas 14 onto the common antenna cable 17. At each antenna 14, a signal selector 28 is provided, which filters the signals on the common antenna cable 17 in order to extract signals of relevance for that particular antenna. These devices will be described more in detail further below. The VNC 20 comprises in such a configuration of a central unit 20 and a number of satellite units 28, but are still logically parts of the base station 8.

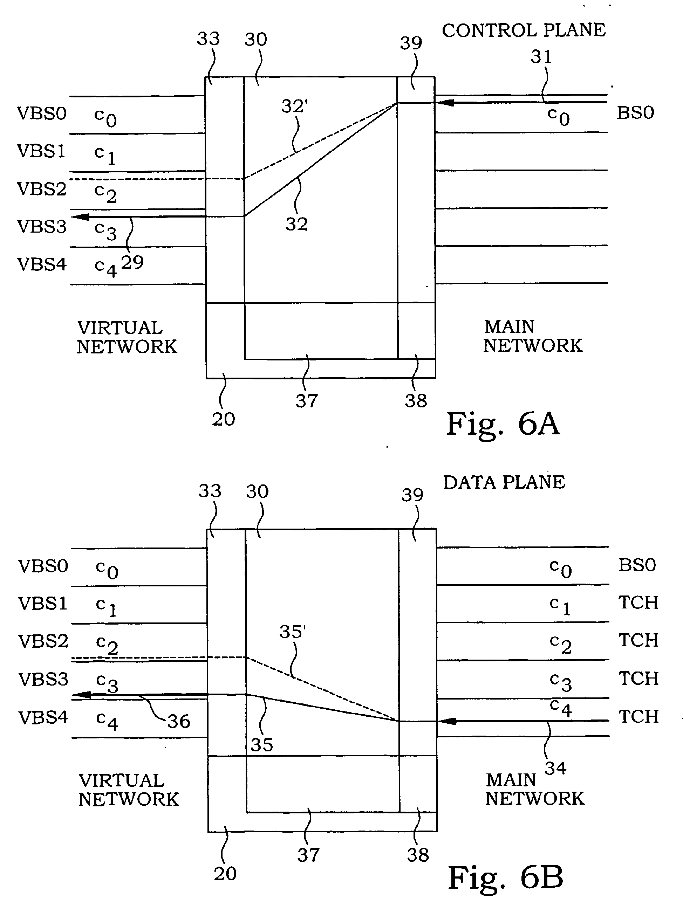

Fig. 6A and 6B illustrates the principles of making the virtual network 24 invisible to the outside system by schematically represent available channels for control signals and data signals, respectively. In Fig. 6A, five sets of physical channels c0 to c4 are depicted. In the present embodiment, it is assumed to be a GSM system and the sets of physical channels correspond to different carrier frequencies. In the right part of the figure, the channel situation at the BSC side is illustrated. The carrier frequencies c₀ to c₄ are at the main network side assigned to a base station with a BSIC "BSO". Carrier frequency c0 is used for control channels, in particular time slots 0 (out of 8). Carrier frequencies c₁ to c₄ are used as pure traffic channels, and so are the time slots of carrier c₀ not used for control signalling.

The carrier frequencies c₀ to c₄ are at the virtual network side assigned to five different virtual base stations with respective BSICs "VBS0" to "VBS4". Each virtual base station is assigned a particular carrier frequency c₀ to c₄, on which both control signalling and data traffic should be transferred.

Control signals 31 for a mobile terminal connected to the base station BSO are sent intended for a particular time slot of frequency carrier c₀. The carriers, or in reality signals intended to be sent on these carriers, are brought to the VNC 20. The VNC 20 comprises a channel translator 30, which associates a communication channel of the external network with an internal virtual cellular network physical channel. This is illustrated by the line 32. Here it can be seen that the control signals 31, arriving at a time slot of c₀ are associated with a time slot in the carrier c₃ on the virtual network side, as illustrated by the line 29. The carrier c₃ is assigned to virtual base station VBS3. The content of the BCH part of the control signalling is normally provided by the base station. In the present invention, such a functionality is easily integrated in the VNC in a control signal injector 33. The control signal injector 33 provides in the present example BCH data defining the VBS3, and inserts this data into the control signals sent towards the virtual network. Also DCCH control signals may have to be modified, both in UL (UpLink) and DL direction, in accordance with the association 32 of the channel translator 30. This is performed by a DCCH modifier 39. In DL signals, any data referring to the actual carrier used or by the identity of the base station is exchanged for corresponding data for the associated channel in the virtual cellular network. In UL signals, a corresponding exchange of data takes place.

The corresponding data plane is illustrated in Fig. 6B. Data traffic 34 associated with the control signals 31 of Fig. 6A is allocated to a particular time slot of carrier c₄ on the main network side. The channel translator 30 of the VNC 20 associates, illustrated by the line 35, this incoming channel with a time slot of carrier c₃ 36 on the virtual network side. The content of the data is unchanged. By such a configuration, the main network will be essentially unaware of the actual channel used in the virtual cellular network.

Since only the VNC 20 has the entire knowledge of the radio connections within the virtual network, intra-virtual-network handovers have to be handled by the VNC or devices connected thereto. The VNC 20 therefore also comprises a handover manager 37. When a mobile terminal connected to the virtual base station VBS3 experiences a too low signal level, it wants to make a handover. A neighbour list of the terminal is intermittently sent in the form of measurement reports on the DCCH in the UL direction. Since the DCCH modifier 39 has access to that information, appropriate choices for handover can be made by the VNC 20. If it is assumed that the mobile terminal has come closer to virtual base station VBS2, the handover manager 37 issues instructions to change the association of the channel translator 30. The control channel on c₀ on the main network side is now associated 32' with a time slot of carrier c₂, i.e. 29', on the virtual network side. In analogy, the association of traffic channels is changed according to 35' to a traffic channel in carrier c₂, 36'.

The main network will be totally unaware of such a handover procedure. The BSC will therefore not experience any increased load due to the increased number of handovers. Even if the VNC 20 in certain applications is not configured to totally separating the channel spaces of virtual and main networks, the VNC 20 may handle the actual handover, and then only report the new utilisation to the BSC.

In a radio network, having a virtual cellular network that is logically separated from the rest of the radio network, also position determination means have to be incorporated in the VNC. In Fig. 6A and 6B, a position estimator is denoted by the reference number 38. This position estimator 38 has access to the associations in the channel translator 30 and by having access to accurate position data of the antennas and data connecting a certain carrier with a certain antenna, the position estimator 38 can easily determine a first approximation of the mobile position. Furthermore, since the DCCH data generally is modified within the VNC, the position estimator 38 can also easily be provided with information from the neighbour list of the mobile terminal. This information can then be used to refine the position estimation. The actual position estimation as such may, however, be performed according to well-known prior art procedures.

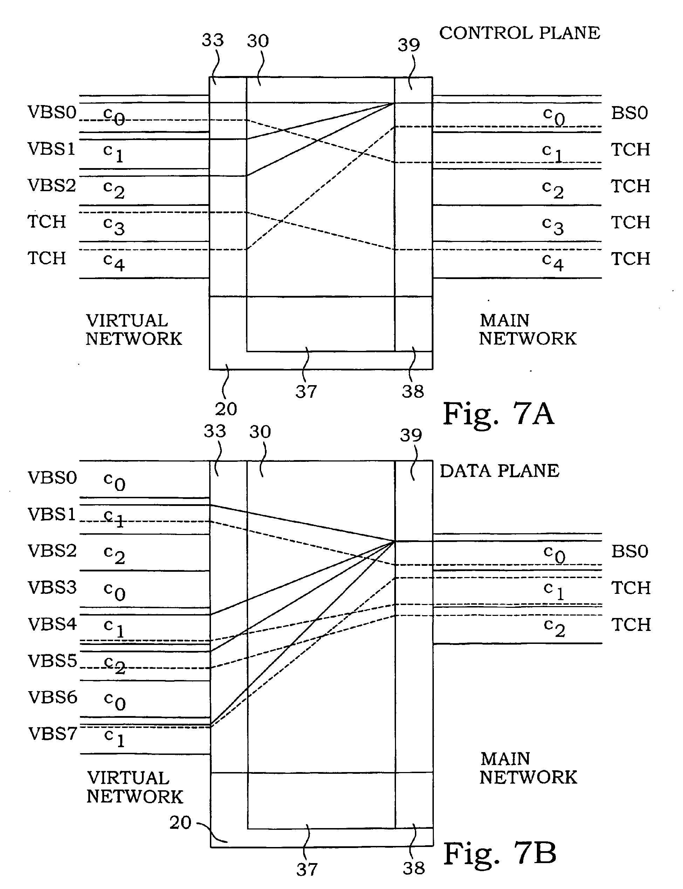

In Fig. 7a, a situation, where there are more available channels than virtual cells, is illustrated. In this figure, control channels are depicted as full lines, whereas traffic channels are depicted as broken lines. Three virtual base stations VBS0 to VBS2 are comprised in the virtual network. The virtual base stations occupy one carrier each for control signalling, in the present example, carriers c₀ to c₂. The carriers c₃ and c₄ are used as pure traffic channels also at the virtual network side. Control signalling from the control channel in c₀ at the main network side is associated with respective control channels in c₀ to c₂ at the virtual network side. Also traffic channels are associated, not only to the respective dedicated channels c₀ to c₂, but also to the general traffic channels on c₃ and c₄. In one embodiment; also the traffic channels on c₃ and c₄ may be dedicated, i.e. intended for a certain virtual base station. However, in another embodiment, the traffic channels on c₃ and c₄ can constitute a common resource for all virtual base stations to use. However, the VNC has to keep records on which common traffic channels that are in use.

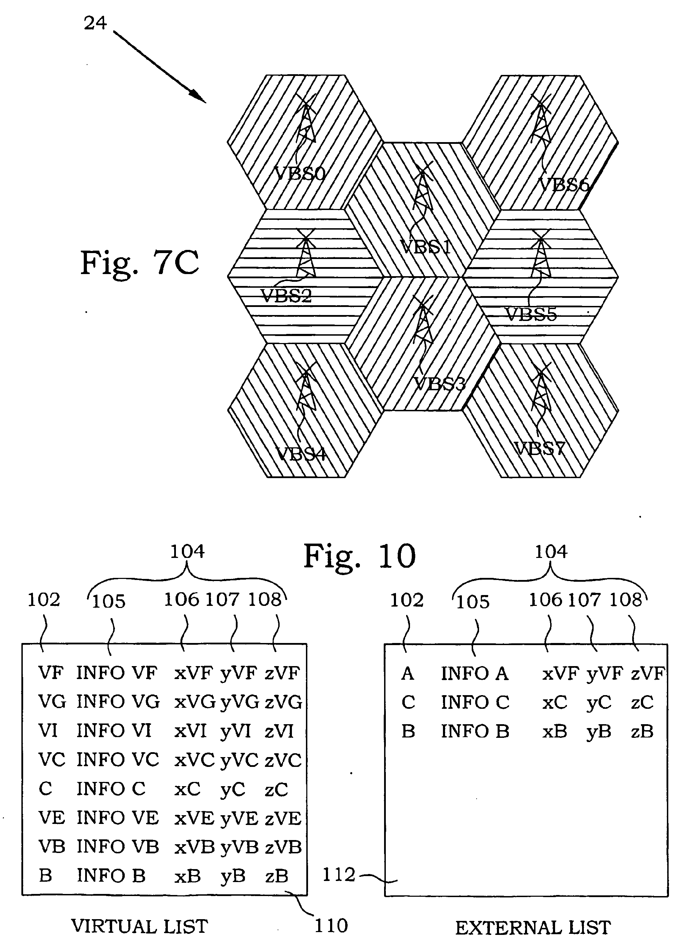

Fig. 7b illustrates a system, where there are more virtual base stations than available carriers. In this case, only three carriers c₀ to c₂ are available, but 8 virtual base stations VBS0 to VBS7. Virtual base stations VBS0, VBS3 and VBS6 are assigned the same signal channel carrier frequency. The same is true for VBS1, VBS4 and VBS7, an also for VBS2 and VBS5. The cells corresponding to these virtual base stations are schematically illustrated in Fig. 7c. Here, it can be seen that the virtual network is arranged employing carrier reuse, at least for the carrier used for control signalling. Two neighbouring cells do not use the same carrier, while cells at longer distances may. The VNC associates the control signals of the c₀ carrier on the main network side with a proper control signal carrier on the virtual network side. BCHs on the virtual network side are also provided with virtual base station identification data, which makes it possible to distinguish between virtual base stations utilising the same carrier frequencies. For instance, control signals to VBS0 and VBS3 are transmitted on the same carrier frequency, but the BCH intended for VBS0 is different from the BCH intended for VBS3. In this embodiment, the virtual base stations VBSO-7 have only access to one carrier each, which means that the traffic data, illustrated by broken lines, have to be associated with the same carrier frequency as is used for the control signal at the virtual network side.

From Figs 6a-b, 7a-c, anyone skilled in the art realises that different combinations of carrier utilisation can be employed. For instance, also a carrier reuse virtual network configuration can be combined with the use of pure traffic data carriers. In such a configuration, the traffic carriers may be dedicated to specific ones of the virtual cells or may be used as a common resource for the entire virtual network.

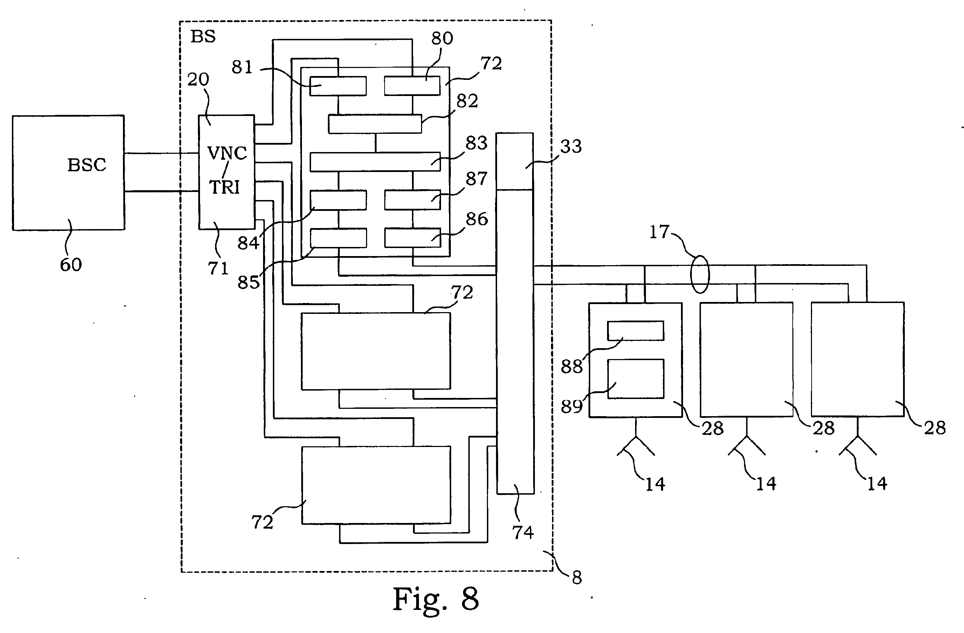

The implementation of the functionalities of the VNC can be made in many different manners. Fig. 8 illustrates a block diagram of one embodiment of a possible configuration. A base station 8 is connected to a BSC 60. The main part of the VNC 20 functionality is placed at the input of the base station 8, and may preferably be integrated with a transceiver radio interface 71 of the base station 8. The VNC translates the intended carriers and the control signalling used during the communication with BSC into virtual network carriers and virtual network control signals, as described above. The output of the VNC 20 is divided into outputs for each intended virtual network carrier. Each output, comprising a data traffic output and a control signal output or only a data traffic output depending on the utilisation of the carrier in question, is connected to a transceiver unit 72. The control signals and data traffic are typically processed in separate error handling units 80, 81, before being encoded in a codec unit 82. The encoded signals are typically released in bursts and the encoded signals are thus processed in a burst handling unit 83. DL signals are multiplexed onto the available channels of the carrier in a channel multiplexor 84 and modulated in a modulator 85. UL traffic is in analogy demodulated in a demodulator 86 and demultiplexed in a channel demultiplexor 87.

In the present embodiment, a distributed antenna system is assumed, and all the used carriers are transferred to the antennas on one common antenna cable 17. The modulated signals to and from the transceiver unit 72 are multiplexed in an antenna transfer multiplexor 74. The antenna transfer multiplexor 74 and the BCCH injector 33 operates as a control signal injector (c.f. Fig. 5). Preferably, the control signal containing carriers are multiplexed in a manner that is easy to extract or filter out. The multiplexed signal is sent on the antenna cable 17 and reaches signal selectors 28 at each antenna 14. The signal selectors comprise a filter 88 or separating unit, which separates out the carrier containing the control signals intended for the virtual base station associated with that particular antenna and any common traffic carriers, if any. These separated carriers are demultiplexed in a demultiplexor 89 and modified into the proper characteristics for transmission. The signals of the separated carriers are then transferred as radio frequency electromagnetic waves by the antennas 14. The corresponding functionalities are present for UL communication in the signal selectors 28 and the multiplexing units 74, 89.

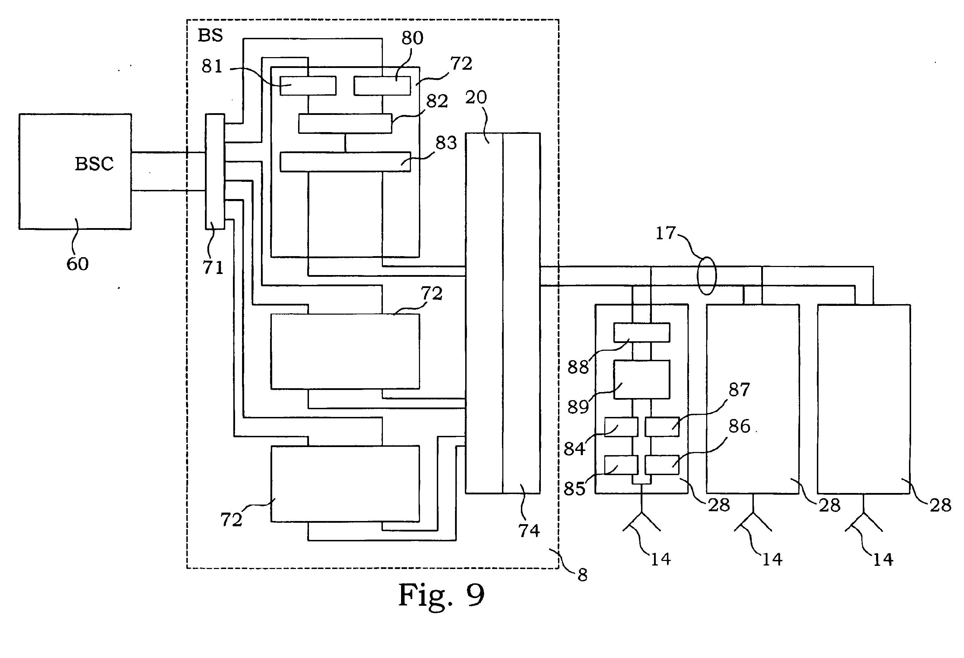

Fig. 9 illustrates another embodiment of the implementation of a VNC in a base station. Here the functionalities of translating carriers and control signals are provided DL with respect of e.g. coding and burst handling. The BSC 60 is connected to a transceiver radio interface 71 in the base station 8, and signals intended for the different carriers are switched to separate transceiver units 72. The transceiver units 72 are in an ordinary manner arranged for error handling, encoding and burst handling. The output from the burst handling unit 83 is, however, in this embodiment connected to the VNC 20, which performs necessary translation of carriers and data associated with the virtual base stations. The signals intended for the different virtual network carriers are multiplexed in a multiplexor 74 and transferred onto the common antenna cable. The signal selectors 28 in this embodiment are in addition to filtering 88 and demultiplexing 89 units also provided with a channel multiplexor 84, a modulator unit 85, a demodulator unit 86 and a channel demultiplexor 87, which normally are situated within the main base station 8.

Many other implementations of the present invention are possible, and the present protection should not be constrained only to the exemplifying embodiments, but instead entirely defined by the appended patent claims.

The basic idea of the present invention - the separation of the virtual network from the main network, gives additional possible advantages. Since the virtual network base stations are used only in the virtual network, the main network can be totally unaware of the existence thereof. However, for providing an improved position determination, the knowledge of the virtual base station positions have to be utilised. This means that also the position determination functionality has to be provided by the VNC or any server connected thereto, as described briefly above. The VNC has the total knowledge of the virtual network configuration, and the mobiles connected thereto continuously send measurement reports corresponding to their neighbour lists. An accurate position determination can thereby be provided.

In situations, where the base station comprising the VNC is operated by e.g. a company or an authority, this accurate positioning might be worth to protect. Knowledge about how the motion patterns of a specific mobile terminal can be used e.g. for planning terrorist attacks or for industrial espionage. In such a case, the operator can choose to keep the accurate position secret to the rest of the communications network. The only information given to the outside network will be the existence of the mobile terminal somewhere inside the cell of the base station. The measurement reports of the mobile terminal, i.e. its neighbour list, has to be modified accordingly before being forwarded to the external network. Fig. 10 illustrates such a neighbour list modification. At the left side, a neighbour list for internal use in the virtual network is illustrated. This list comprises entries corresponding measurements of virtual base station signals, denoted by an initial "V", and measurements of ordinary base station signals. The VNC is comprised in a base station that for the external network is denoted by "A". The VNC modifies the neighbour list before it is forwarded to the external network. Since the first entry is a virtual base station, this entry is taken as the main signal for the entire virtual network. The measurement values, e.g. radio condition quality, are kept, but now referring to the "normal" base station "A". Remaining virtual base station entries are removed and only the ordinary base station entries are kept. The main network receives the modified neighbour list and can use this for a position determination of somewhat less accuracy.

If an accurate position shall be exported to the macro network, i.e. the network outside the local network, this must be handled and authorised by the VNC and/or the positioning unit. In a system, where the local position estimation is kept secret, there is preferably a functionality that overrides this secrecy when an emergency call is initiated. An emergency call could be detected by the VNC, which then may provide the operator by the complete position information.

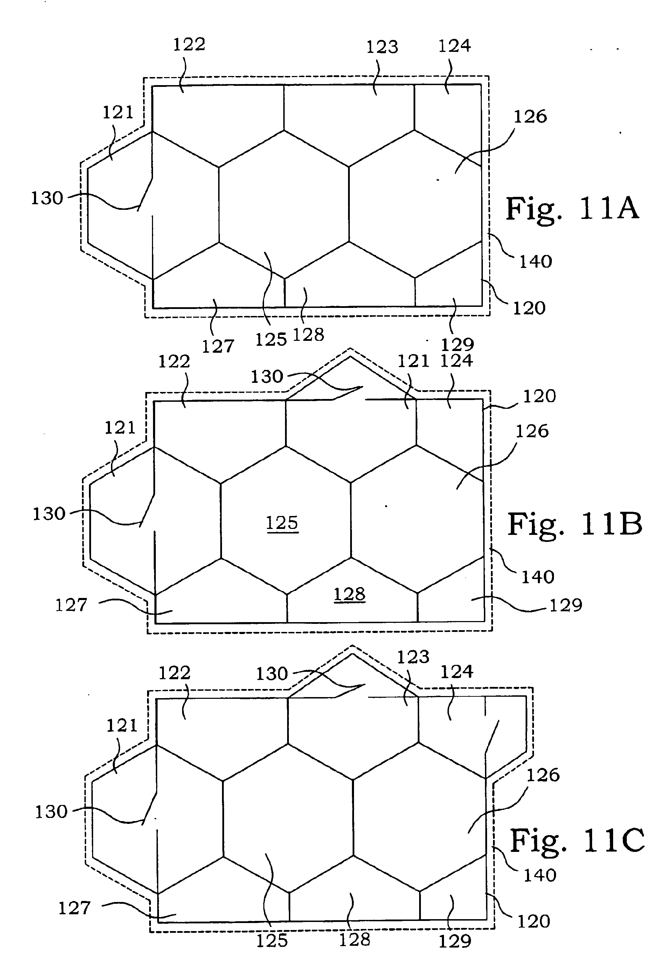

The situations when a mobile terminal enters or leaves the virtual network call for some additional arrangements. In Fig. 11A, a building 120 is equipped with a virtual network of nine virtual cells 121-129, but is externally regarded as one cell 140. The building 120 has one entrance 130, which is covered by virtual cell 121. Since use of the virtual network only is interesting upon entering through the entrance 130, the virtual cell 121 can be used as an entrance virtual cell. This virtual cell has then preferably the same BSIC and control carrier frequency as the "external" cell 140.

When a mobile terminal is handed over to cell 140, which is controlled by a base station having a VNC, the mobile terminal is entered into the virtual network. The mobile terminal receives information about virtual cell BSIC's and control carrier frequencies to search for from the VNC. The VNC also takes over handover and position estimation routines. The virtual base stations will thereby appear in the neighbour list. When the mobile terminal moves around within the building 120, handover to other virtual cells will be performed by the VNC. The BSC still imagines that the mobile terminal is in cell 140.

When the mobile terminal leaves the building and the signals from the virtual cell 121 becomes too low, external cells are again available at the top of the neighbour list, and the mobile terminal requests a handover to one of these cells. The VNC recognises this cell as an external cell and returns the handover control to the BSC.

In order to avoid that a mobile station that is present in a cell in the virtual network different from the virtual cell 121 requests a handover to an external cell, the VNC may remove any external cells from the measurement list. An alternative is to provide external cells in the neighbour list with a flag indicating that handover to that cell is not permitted. Another alternative is that the VNC itself keeps track of which handover operations that are allowed. Since all handovers from a virtual cell has to be handled by the VNC, the VNC may easily deny requests for handovers to external cells except for mobile stations present in the virtual cell 121.

In Fig. 11B, the building 120 has two entrances. The entrance virtual cell 121 here has to be present at both entrances. The operation then follows the previously described principles. A small disadvantage in this context is that a position estimation may have difficulties in distinguishing between the different entrances 130.

In Fig. 11C, another embodiment is illustrated, which easily operates with multiple entrances 130. Here, the "external" cell 140 of the base station associated with the building 120 is overlaid over the entire building area. The control signals and BSIC are available everywhere. However, when a mobile terminal enters into this cell, the mobile terminal will automatically by the VNC be handed over to a virtual cell, which thereby will provide the improved position estimation. The "external" cell 140 will thereby also be kept at a low usage level, which ensures free capacity for mobile stations entering or leaving the building. Such a common control channel will hence be used as an interface between the virtual network and the main network.

The translation of carriers and different channels of carriers between the external network and the virtual network may cause some minor complications. If a single carrier for control signals and a number of pure traffic channel carriers are used at the external network, but all carriers are used for control signals to different virtual base stations, the number of traffic channels in the virtual network is smaller than in the external network. The external network thus has to he informed about that there is such a limitation in the total amount of available resources. However, the exact configuration of these resources may not be necessary to know.

The VNC makes it possible to keep some information secret within the virtual network. The VNC is also suitable for adding other functionalities. In an area covered by a base station, for instance a building, there may be certain sub-areas, for which there are certain rules for using mobile terminals. In a hospital, the mobile terminals may influence vital medical equipment and therefore is the use of mobile terminals often forbidden in many hospital areas. However, there might be many locations within a hospital, where the use of mobile terminals anyway may be admitted. If a hospital is covered by a virtual network, the VNC can determine the accurate location of every mobile terminal. If a terminal comes close to an area, in which mobile terminals are forbidden, the VNC can either send a notification to the user, or simply disconnect the mobile terminal.

Another application suitable to integrate in a VNC could be entrance authorisation. If a mobile terminal enters into an area, into which only authorised personnel is allowed to bring active mobile terminals, the VNC can in connection with e.g. a handover procedure request an authorisation proof from the user of the mobile terminal. If the user can not provide such an authorisation verification, the VNC may disconnect the call. Also, if a mobile tries to connect when already being in a restricted area, the VNC can request such authorisation verifications.

Power control is another feature in which the VNC preferably operates as a moderator or translator means. Commands and measurements from the mobile and the BSC are translated into information that makes sense in the respective cell environment. The details of the actual implementations will not be discussed further.

The managing method according to the present invention is primarily targeting managing in cellular mobile radio systems. GSM is the mobile radiotelephony standard used in the exemplary embodiments presented in this disclosure. However, the present invention is also applicable on other cellular mobile radio systems and their related standards, such as e.g. other radio standards based on TDMA (Time Division Multiple Access), CDMA (Code Division Multiple Access), Wideband CDMA (WCDMA) and TDD (Time Division Duplex) technology.

In the above described GSM-based embodiments, the base station is the radio access station used in GSM. Likewise, the base station controller is the GSM example of a radio access station controller. In other systems, these types of nodes exist, but sometimes under somewhat different names. In WCDMA for example, access points and radio network controllers correspond to radio access stations and radio station access controllers, respectively. In 3G applications, the base station is typically denoted "node B". In the present disclosure, "radio access station" is intended to comprise all different types of base stations, node B's, access points etc. according to the used communication method.

In the described GSM-based embodiments, the time slot constitutes a physical channel. The physical channel is the smallest part of a radio resource that can be allocated to a single particular user. A carrier frequency can thereby be seen as a set of time slots (or physical channels) that all are available for use by a particular base station. The base station can also have access to more than one frequency carrier, i.e. to more than one set of physical channels.

In WCDMA, the physical channel is characterised by a particular code, typically a combination of a scrambling code and a channelisation code. Each access point can typically use physical channels having a particular scrambling code, in principle independent on the used channelisation codes. The naturally defined set of physical channels available for use by a particular radio access station is in WCDMA characterised by a particular scrambling code.

Also in other cellular communications systems, there is a smallest allocable resource unit, in the present disclosure called a physical channel. Each radio access station has furthermore typically access to a certain set of physical channels, predefined during cell planning or not. The principles regarding carriers and time slots in the above embodiments are therefore generally applicable to sets of physical channels and the physical channels themselves.

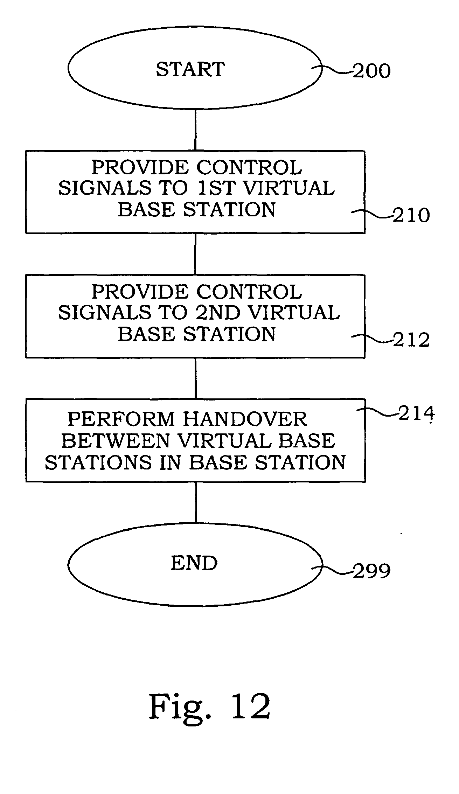

The main steps of an embodiment of a method according to the present invention are illustrated in Fig. 12. The procedure starts in step 200. In step 210, control signals associated with a first virtual base station is provided to a first antenna. In step 212, control signals associated with a second virtual base station is provided to a second antenna. A handover between the first and second virtual base stations is performed in a common base station controlling both virtual base stations in step 214. The procedure is ended in step 299.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. Radio access station (8), having access to m sets of physical channels (c₀-c₄), m being an integer larger than 1, comprising:
- an antenna output for connection to an antenna network (24) comprising n antennas (14), n being an integer larger than 1;
- a network controller (20) for controlling the antenna network comprising a channel translator (30) mutually associating channels used for communication with a radio access station controller (60) with physical channels of the sets of physical channels (c₀-c₄) used by the n antennas (14) for communicating with a mobile station (6),
the network controller (20) being arranged to control handover operations between a first set of physical channels of the m sets of physical channels (c₀-c₄) and a second set of physical channels of the m sets of physical channels (c₀-c₄); **characterised in that** the network controller (20) further comprises a position determination means (38) for defining the position of the mobile station (6) by accessing the associations in the channel translator (30) and by having access to accurate position data of the antennas (14).

2. Radio access station according to claim 1, further comprising
the network controller (20) being arranged to provide control signals associated with a first antenna on the first set of physical channels intended for the first antenna of the n antennas (14); and
the network controller (20) being arranged to provide control signals associated with a second antenna, different from the first antenna, on the second set of physical channels intended for the second antenna of the n antennas (14).

3. Radio access station according to claim 1 or 2, further comprising the network controller (20) is arranged to terminate information associated with the separate antennas, and to communicate only the information associated with the radio access station as a whole to the radio access station controller (60), whereby a connected mobile terminal (6) experiences the n antennas (14) as antennas of separate cells (7), while the radio access station controller (60) experiences the n antennas (14) as antennas of one single cell (4).

4. Radio access station according to any of the claims 1 to 3, further comprising the network controller (20) further comprises means (38) for position estimation based on neighbour lists (100; 110).

5. Radio access station according to claim 4, further comprising the network controller (20) further comprises means for modifying neighbour lists (100; 110) of connected mobile terminals (6) for forwarding to the radio access station controller (60).

6. Radio access station according to any of the claims 1 to 5, further comprising the antenna output is an output of a common antenna cable (17).

7. Radio access station according to any of the claims 1 to 6, further comprising the network controller (20) comprises a broadcast control signal injector (26, 33).

8. Radio access station according to any of the claims 1 to 5, further comprising at least one of the n antennas (14) is connected by a separate antenna cable.

9. Radio access station according to any of the claims 1 to 8, further comprising the radio access station is selected from the list of:
base station;
access point; and
node B.

10. Radio access station according to any of the claims 1 to 9, further comprising the radio access station operates according to GSM, whereby the sets of physical channels are frequency carriers (c₀-c₄) and the physical channels are time slots.

11. Radio access station according to any of the claims 1 to 9, further comprising the radio access station operates according to CDMA or WCDMA, whereby the sets of physical channels are **characterised by** scrambling codes and the physical channels are **characterised by** channelisation codes.

12. Radio access station according to any of the claims 1 to 11, further comprising means for restricting use of mobile terminals in areas covered by the radio access station.

13. Radio access station according to claim 12, further comprising the means for restricting use comprises notification means, sending a notification to a mobile terminal when entering into an area of restricted use.

14. Radio access station according to claim 12 or 13, further comprising the means for restricting use comprises disconnecting means, disconnecting communications to a mobile terminal being in an area of restricted use.

15. Radio access station according to claim 12, 13 or 14, further comprising the means for restricting use comprises authorisation means, requesting an authorisation verification from a mobile terminal being in or entering an area of restricted use.

16. Radio access network, comprising:
radio access station controller (60);
radio access station (8), having access to m sets of physical channels (c₀-c₄), m being an integer larger than 1; and
an antenna network (24) comprising n antennas (14) connected to the radio access station (8), n being an integer larger than 1;
wherein the radio access station (8) comprises a network controller (20) for controlling the antenna network comprising a channel translator (30) mutually associating channels used for communication with the radio access station controller (60) with physical channels of the sets of physical channels (c₀-c₄) used by the n antennas (14),
the network controller (20) being arranged to control handover operations between a first set of physical channels of the m sets of physical channels (c₀-c₄) and a second set of physical channels of the m sets of physical channels (c₀-c₄)
**characterised in that** the network controller (20) further comprises a position determination means (38) for defining the position of the mobile station (6) by accessing the associations in the channel translator (30) and by having access to accurate position data of the antennas (14).

17. Radio access network according to claim 16, further comprising
the network controller (20) being arranged to provide control signals associated with a first antenna on the first set of physical channels intended for a first antenna of the n antennas (14); and
the network controller (20) being arranged to provide control signals associated with a second antenna, different from the first antenna, on the second set of physical channels intended for a second antenna of the n antennas (14).

18. Radio access network according to claim 16 or 17 further comprising the network controller (20) being arranged to terminate information associated with the separate antennas, and to communicate only the information associated with the radio access station as a whole to the radio access station controller (60), whereby a connected mobile terminal (6) experiences the n antennas (14) as antennas of separate cells (7), while the radio access station controller (60) experiences the n antennas (14) as antennas of one single cell (4).

19. Radio access network according to any of the claims 16 to 18, further comprising the network controller (20) comprises means for position estimation based on neighbour lists (100; 110).

20. Radio access network according to claim 19, further comprising the network controller (20) comprises means for modifying neighbour lists (100; 110) of connected mobile terminals (60) for forwarding to the radio access station controller (60).

21. Radio access network according to any of the claims 16 to 20, further comprising the n antennas (14) are connected by a common antenna cable (17).

22. Radio access network according to any of the claims 16 to 21, further comprising signal selectors (28) at each of the n antennas (14) and in that the network controller (20) comprises a broadcast control signal injector (26, 33).

23. Radio access network according to any of the claims 16 to 20, further comprising at least one of the n antennas (14) is connected by a separate antenna cable.

24. Radio access network according to any of the claims 16 to 23, further comprising the radio access station is selected from the list of:
base station;
access point; and
node B.

25. Radio access network according to any of the claims 16 to 23, further comprising the radio access station controller is selected from the list of:
base station controller; and
radio network controller.

26. Radio access network according to any of the claims 16 to 25, further comprising the radio access network operates according to GSM, whereby the sets of physical channels are frequency carriers (c₀-c₄) and the physical channels are time slots.

27. Radio access network according to any of the claims 16 to 25, further comprising the radio access network operates according to CDMA or WCDMA, whereby the sets of physical channels are **characterised by** scrambling codes and the physical channels are **characterised by** channelisation codes.

28. Method for managing a part of a mobile communications network, by performing the steps of:
providing control signals associated with a first antenna on a first set of physical channels intended for a first antenna;
providing control signals associated with a second antenna, different from the first antenna, on a second set of physical channels intended for a second antenna;
mutually associating channels used for communication with a radio access station controller (60) with physical channels of the sets of physical channels (c₀-c₄) used by the n antennas (14) for communicating with a mobile station (6);performing, a handover of a communication between sets of physical channels (c₀-c₄) of two antennas (14) controlled by a radio access station (8).
**characterised by** the further step of defining the position of the mobile station (6) by accessing the channel associations and by having access to accurate position data of the antennas (14).

29. Method according to claim 28, further comprising the handover is performed transparently with respect to a radio access station controller (60) controlling the radio access station (8).

30. Method according to any of the claims 28 to 29, further comprising the step of:
adaptively associating physical channels of antennas with communication channels of use between the radio access station (8) and the radio access station controller (60).

31. Method according to any of the claims 28 to 30, further comprising the step of:
estimating, in the radio access station (8), a position of a mobile terminal (6) connected to a antenna.

32. Method according to claim 31, further comprising the step of estimating is based on a content of a neighbour list.

33. Method according to claim 31 or 32, further comprising the step of:
restricting use of a mobile terminal in areas covered by the radio access station.

34. Method according to claim 33, further comprising the step of restricting use comprises the step of notifying a mobile terminal when entering into an area of restricted use.

35. Method according to claim 33 or 34, further comprising the step of restricting use comprises the step of disconnecting communications to a mobile terminal being in an area of restricted use.

36. Method according to claims 33-35, further comprising the step of restricting use comprises the step of requesting an authorisation verification from a mobile terminal being in or entering an area of restricted use.

## Patentansprüche

1. Funkzugangsstation (8) mit Zugang zu m Mengen von physikalischen Kanälen (c₀-c₄), wo m eine ganze Zahl größer als 1 ist, Folgendes umfassend:
- einen Antennenausgang zur Verbindung an ein Antennennetz (24), das n Antennen (14) umfasst, wo n eine ganze Zahl größer als 1 ist;
- eine Netzsteuerung (20) zum Steuern des Antennennetzes, einen Kanalübersetzer (30) umfassend, der zur Kommunikation mit einer Funkzugangsstationssteuerung (60) verwendete Kanäle mit physikalischen Kanälen der Mengen von physikalischen Kanälen (c₀-c₄) gegenseitig assoziiert, die von den n Antennen (14) zum Kommunizieren mit einer Mobilstation (6) verwendet werden,
wobei die Netzsteuerung (20) dazu angeordnet ist, Handover-Operationen zwischen einer ersten Menge von physikalischen Kanälen der m Mengen von physikalischen Kanälen (c₀-c₄) und einer zweiten Menge von physikalischen Kanälen der m Mengen von physikalischen Kanälen (c₀-c₄) zu steuern; **dadurch gekennzeichnet, dass** die Netzsteuerung (20) außerdem ein Positionsbestimmungsmittel (38) umfasst, um die Position der Mobilstation (6) dadurch zu definieren, dass es auf die Assoziationen im Kanalübersetzer (30) zugreift und Zugriff auf genaue Positionsdaten der Antennen (14) hat.

2. Funkzugangsstation nach Anspruch 1, außerdem umfassend, dass:
die Netzsteuerung (20) dazu angeordnet ist, Steuersignale bereitzustellen, die mit einer ersten Antenne auf der ersten Menge von physikalischen Kanälen assoziiert sind, die für die erste Antenne der n Antennen (14) vorgesehen sind; und
die Netzsteuerung (20) dazu angeordnet ist, Steuersignale bereitzustellen, die mit einer von der ersten Antenne verschiedenen zweiten Antenne auf der zweiten Menge von physikalischen Kanälen assoziiert sind, die für die zweite Antenne der n Antennen (14) vorgesehen sind.

3. Funkzugangsstation nach Anspruch 1 oder 2, außerdem umfassend, dass die Netzsteuerung (20) dazu angeordnet ist, mit den separaten Antennen assoziierte Information zu beenden und nur die mit der Funkzugangsstation als Ganzes assoziierte Information an die Funkzugangsstationssteuerung (60) zu kommunizieren, wodurch ein angeschlossenes Mobilendgerät (6) die n Antennen (14) als Antennen von separaten Zellen (7) wahrnimmt, während die Funkzugangsstationssteuerung (60) die n Antennen (14) als Antennen einer einzelnen Zelle (4) wahrnimmt.

4. Funkzugangsstation nach einem der Ansprüche 1 bis 3, außerdem umfassend, dass die Netzsteuerung (20) außerdem ein Mittel (38) zur Positionsschätzung auf der Basis von Nachbarlisten (100; 110) umfasst.

5. Funkzugangsstation nach Anspruch 4, außerdem umfassend, dass die Netzsteuerung (20) außerdem ein Mittel umfasst, um Nachbarlisten (100; 110) von angeschlossen Mobilendgeräten (6) für das Weiterleiten an die Funkzugangsstationssteuerung (60) zu modifizieren.

6. Funkzugangsstation nach einem der Ansprüche 1 bis 5, außerdem umfassend, dass der Antennenausgang ein Ausgang eines gemeinsamen Antennenkabels (17) ist.

7. Funkzugangsstation nach einem der Ansprüche 1 bis 6, außerdem umfassend, dass die Netzsteuerung (20) einen Broadcast-Steuersignalinjektor (26, 33) umfasst.

8. Funkzugangsstation nach einem der Ansprüche 1 bis 5, außerdem umfassend, dass mindestens eine der n Antennen (14) durch ein separates Antennenkabel angeschlossen ist.

9. Funkzugangsstation nach einem der Ansprüche 1 bis 8, außerdem umfassend, dass die Funkzugangsstation aus der folgenden Liste ausgewählt wird:
Basisstation;
Zugangspunkt; und
Node B.

10. Funkzugangsstation nach einem der Ansprüche 1 bis 9, außerdem umfassend, dass die Funkzugangsstation gemäß GSM arbeitet, wodurch die Mengen von physikalischen Kanälen Frequenzträger (c₀-c₄) sind und die physikalischen Kanäle Zeitschlitze sind.

11. Funkzugangsstation nach einem der Ansprüche 1 bis 9, außerdem umfassend, dass die Funkzugangsstation gemäß CDMA oder WCDMA arbeitet, wodurch die Mengen von physikalischen Kanälen durch Verwürfelungscodes charakterisiert sind und die physikalischen Kanäle durch Kanalisationscodes charakterisiert sind.

12. Funkzugangsstation nach einem der Ansprüche 1 bis 11, außerdem ein Mittel umfassend, um die Verwendung von Mobilendgeräten in Bereichen zu beschränken, die durch die Funkzugangsstation versorgt werden.

13. Funkzugangsstation nach Anspruch 12, außerdem umfassend, dass das Mittel zur Verwendungsbeschränkung ein Meldemittel umfasst, das eine Meldung an ein Mobilendgerät sendet, wenn es einem Bereich der Verwendungsbeschränkung betritt.

14. Funkzugangsstation nach Anspruch 12 oder 13, außerdem umfassend, dass das Mittel zur Verwendungsbeschränkung ein Unterbrechungsmittel umfasst, das Kommunikationen an ein Mobilendgerät unterbricht, das sich in einem Bereich der Verwendungsbeschränkung befindet.

15. Funkzugangsstation nach Anspruch 12, 13 oder 14, außerdem umfassend, dass das Mittel zur Verwendungsbeschränkung ein Berechtigungsmittel umfasst, das eine Berechtigungsverifikation von einem Mobilendgerät anfordert, das einen Bereich der Verwendungsbeschränkung betritt oder sich in ihm befindet.

16. Funkzugangsnetz, Folgendes umfassend:
Funkzugangsstationssteuerung (60);
Funkzugangsstation (8) mit Zugang zu m Mengen von physikalischen Kanälen (c₀-c₄), wo m eine ganze Zahl größer als 1 ist; und
ein Antennennetz (24), n Antennen (14) umfassend, die an die Funkzugangsstation (8) angeschlossen sind, wo n eine ganze Zahl größer als 1 ist;
worin die Funkzugangsstation (8) eine Netzsteuerung (20) zum Steuern des Antennennetzes umfasst, einen Kanalübersetzer (30) umfassend, der zur Kommunikation mit der Funkzugangsstationssteuerung (60) verwendete Kanäle mit physikalischen Kanälen der Mengen von physikalischen Kanälen (c₀-c₄) gegenseitig assoziiert, die von den n Antennen (14) verwendet werden,
wobei die Netzsteuerung (20) dazu angeordnet ist, Handover-Operationen zwischen einer ersten Menge von physikalischen Kanälen von in Mengen von physikalischen Kanälen (c₀-c₄) und einer zweiten Menge von physikalischen Kanälen der m Mengen von physikalischen Kanälen (c₀-c₄) zu steuern;
**dadurch gekennzeichnet, dass** die Netzsteuerung (20) außerdem ein Positionsbestimmungsmittel (38) umfasst, um die Position der Mobilstation (6) dadurch zu definieren, dass es auf die Assoziationen im Kanalübersetzer (30) zugreift und Zugriff auf genaue Positionsdaten der Antennen (14) hat.

17. Funkzugangsnetz nach Anspruch 16, außerdem umfassend, dass:
die Netzsteuerung (20) dazu angeordnet ist, Steuersignale bereitzustellen, die mit einer ersten Antenne auf der ersten Menge von physikalischen Kanälen assoziiert sind, die für eine erste Antenne der n Antennen (14) vorgesehen sind; und
die Netzsteuerung (20) dazu angeordnet ist, Steuersignale bereitzustellen, die mit einer von der ersten Antenne verschiedenen zweiten Antenne auf der zweiten Menge von physikalischen Kanälen assoziiert sind, die für eine zweite Antenne der n Antennen (14) vorgesehen sind.

18. Funkzugangsnetz nach Anspruch 16 oder 17, außerdem umfassend, dass die Netzsteuerung (20) dazu angeordnet ist, mit den separaten Antennen assoziierte Information zu beenden und nur die mit der Funkzugangsstation als Ganzes assoziierte Information an die Funkzugangsstationssteuerung (60) zu kommunizieren, wodurch ein angeschlossenes Mobilendgerät (6) die n Antennen (14) als Antennen von separaten Zellen (7) wahrnimmt, während die Funkzugangsstationssteuerung (60) die n Antennen (14) als Antennen einer einzelnen Zelle (4) wahrnimmt.

19. Funkzugangsnetz nach einem der Ansprüche 16 bis 18, außerdem umfassend, dass die Netzsteuerung (20) ein Mittel zur Positionsschätzung auf der Basis von Nachbarlisten (100; 110) umfasst.

20. Funkzugangsnetz nach Anspruch 19, außerdem umfassend, dass die Netzsteuerung (20) ein Mittel umfasst, um Nachbarlisten (100; 110) von angeschlossen Mobilendgeräten (6) für das Weiterleiten an die Funkzugangsstationssteuerung (60) zu modifizieren.

21. Funkzugangsnetz nach einem der Ansprüche 16 bis 20, außerdem umfassend, dass die n Antennen (14) durch ein gemeinsames Antennenkabel (17) verbunden sind.

22. Funkzugangsnetz nach einem der Ansprüche 16 bis 21, außerdem Signalselektoren (28) an jeder der n Antennen (14) umfassend, und umfassend, dass die Netzsteuerung (20) einen Broadcast-Steuersignalinjektor (26, 33) umfasst.

23. Funkzugangsnetz nach einem der Ansprüche 16 bis 20, außerdem umfassend, dass mindestens eine der n Antennen (14) durch ein separates Antennenkabel verbunden ist.

24. Funkzugangsnetz nach einem der Ansprüche 16 bis 23, außerdem umfassend, dass die Funkzugangsstation aus der folgenden Liste ausgewählt wird:
Basisstation;
Zugangspunkt; und
Node B.

25. Funkzugangsnetz nach einem der Ansprüche 16 bis 23, außerdem umfassend, dass die Funkzugangsstationssteuerung aus der folgenden Liste ausgewählt wird:
Basisstationssteuerung; und
Funknetzsteuerung.

26. Funkzugangsnetz nach einem der Ansprüche 16 bis 25, außerdem umfassend, dass das Funkzugangsnetz gemäß GSM arbeitet, wodurch die Mengen von physikalischen Kanälen Frequenzträger (c₀-c₄) sind und die physikalischen Kanäle Zeitschlitze sind.

27. Funkzugangsnetz nach einem der Ansprüche 16 bis 25, außerdem umfassend, dass das Funkzugangsnetz gemäß CDMA oder WCDMA arbeitet, wodurch die Mengen von physikalischen Kanälen durch Verwürfelungscodes charakterisiert sind und die physikalischen Kanäle durch Kanalisationscodes charakterisiert sind.

28. Verfahren zum Verwalten eines Teils eines Mobilkommunikationsnetzes durch Ausführen der folgenden Schritte:
Bereitstellen von Steuersignalen, die mit einer ersten Antenne auf einer ersten Menge von physikalischen Kanälen assoziiert sind, die für eine erste Antenne vorgesehen sind;
Bereitstellen von Steuersignalen, die mit einer von der ersten Antenne verschiedenen zweiten Antenne auf einer zweiten Menge von physikalischen Kanälen assoziiert sind, die für eine zweite Antenne vorgesehen sind;
gegenseitiges Assoziieren von Kanälen, die zur Kommunikation mit einer Funkzugangsstationssteuerung (60) mit physikalischen Kanälen der Mengen von physikalischen Kanälen (c₀-c₄) verwendet werden, die von den n Antennen (14) zum Kommunizieren mit einer Mobilstation (6) verwendet werden; Ausführen eines Handovers einer Kommunikation zwischen Mengen von physikalischen Kanälen (c₀-c₄) von zwei Antennen (14), die durch eine Funkzugangsstation (8) gesteuert werden;
gekennzeichet durch den weiteren Schritt des Definierens der Position der Mobilstation (6) durch Zugreifen auf die Kanalassoziationen und dadurch, dass genaue Positionsdaten der Antennen (14) zugreifbar sind.

29. Verfahren nach Anspruch 28, außerdem umfassend, dass der Handover mit Bezug auf eine Funkzugangsstationsteuerung (60), die die Funkzugangsstation (8) steuern, transparent aufgeführt wird.

30. Verfahren nach einem der Ansprüche 28 bis 29, außerdem folgenden Schritt umfassend:
adaptives Assoziieren physikalischer Kanäle von Antennen mit Kommunikationskanälen, die zwischen der Funkzugangsstation (8) und der Funkzugangsstationssteuerung (60) verwendet werden.

31. Verfahren nach einem der Ansprüche 28 bis 30, außerdem folgenden Schritt umfassend:
in der Funkzugangsstation (8) eine Position eines Mobilendgeräts (6) schätzen, das an eine Antenne angeschlossen ist.

32. Verfahren nach Anspruch 31, außerdem umfassend, dass der Schritt des Schätzens auf einem Inhalt einer Nachbarliste basiert.

33. Verfahren nach Anspruch 31 oder 32, außerdem folgenden Schritt umfassend:
Beschränkten der Verwendung eines Mobilendgeräts in Bereichen, die von der Funkzugangsstation versorgt werden.

34. Verfahren nach Anspruch 33, außerdem umfassend, der Schritt der Verwendungsbeschränkung den Schritt umfasst, einem Mobilendgerät zu melden, wenn es einen Bereich der Verwendungsbeschränkung betritt.

35. Verfahren nach Anspruch 33 oder 34, außerdem umfassend, der Schritt der Verwendungsbeschränkung den Schritt umfasst, Kommunikationen an ein Mobilendgerät zur beenden, das sich in einem Bereich der Verwendungsbeschränkung befindet.

36. Verfahren nach einem der Ansprüche 33 bis 35, außerdem umfassend, dass der Schritt der Verwendungsbeschränkung den Schritt umfasst, von einem Mobilendgerät, das einen Bereich der Verwendungsbeschränkung betritt oder sich in ihm befindet, eine Berechtigungsverifikation anzufordern.

## Revendications

1. Station d'accès radio (8), ayant accès à m ensembles de canaux physiques (C₀ - C₄), m étant un nombre entier supérieur à 1, comprenant :
- une sortie d'antenne destinée à être connectée un réseau d'antennes (24) comprenant n antennes (14), n étant un nombre entier supérieur à 1 ;
- un contrôleur de réseau (20) pour commander le réseau d'antennes, comprenant un translateur de canal (30) associant mutuellement des canaux utilisés pour communiquer avec un contrôleur de station d'accès radio (60) à des canaux physiques des ensembles de canaux physiques (c₀ - c₄) utilisés par les n antennes (14) en vue de communiquer avec une station mobile (6) ;
le contrôleur de réseau (20) étant agencé de manière à commander des opérations de transfert intercellulaire entre un premier ensemble de canaux physiques des m ensembles de canaux physiques (c₀ - c₄) et un second ensemble de canaux physiques des m ensembles de canaux physiques (c₀ - c₄) ; **caractérisé en ce que** le contrôleur de réseau (20) comprend en outre un moyen de détermination de position (38) pour définir la position de la station mobile (6) en accédant à des associations dans le translateur de canal (30) et en ayant accès à des données de position précises des antennes (14).

2. Station d'accès radio selon la revendication 1, dans laquelle en outre :
le contrôleur de réseau (20) est agencé de manière à fournir des signaux de commande associés à une première antenne sur le premier ensemble de canaux physiques destiné à la première antenne des n antennes (14) ; et
le contrôleur de réseau (20) est agencé de manière à fournir des signaux de commande associés à une seconde antenne, différente de la première antenne, sur le second ensemble de canaux physiques destiné à la seconde antenne des n antenne (14).

3. Station d'accès radio selon la revendication 1 ou 2, dans laquelle en outre le contrôleur de réseau (20) est de manière à mettre fin à des informations associées aux antennes individuelles, et à communiquer uniquement les informations associées à la station d'accès radio dans son ensemble au contrôleur de station d'accès radio (60), moyennant quoi un terminal mobile connecté (6) perçoit les n antennes (14) comme des antennes de cellules distinctes (7), tandis que le contrôleur de station d'accès radio (60) perçoit les n antennes (14) comme des antennes d'une cellule unique (4).

4. Station d'accès radio selon l'une quelconque des revendications 1 à 3, dans laquelle le contrôleur de réseau (20) comprend en outre un moyen (38) d'estimation de position sur la base de listes de voisinage (100 ; 110).

5. Station d'accès radio selon la revendication 4, dans laquelle le contrôleur de réseau (20) comprend en outre un moyen pour modifier des listes de voisinage (100 ; 110) de terminaux mobiles connectés (6) à acheminer vers le contrôleur de station d'accès radio (60).

6. Station d'accès radio selon l'une quelconque des revendications 1 à 5, dans laquelle en outre la sortie d'antenne est une sortie d'un câble d'antenne commun (17).

7. Station d'accès radio selon l'une quelconque des revendications 1 à 6, dans laquelle en outre le contrôleur de réseau (20) comprend un injecteur de signaux de commande de diffusion (26, 33).

8. Station d'accès radio selon l'une quelconque des revendications 1 à 5, dans laquelle en outre au moins l'une des n antennes (14) est connectés par un câble d'antenne individuel.

9. Station d'accès radio selon l'une quelconque des revendications 1 à 8, dans laquelle en outre la station d'accès radio est sélectionnée dans la liste ci-dessous comportant :
une station de base ;
un point d'accès ; et
une station « Noeud B ».

10. Station d'accès radio selon l'une quelconque des revendications 1 à 9, dans laquelle en outre la station d'accès radio opère selon le système GSM, moyennant quoi les ensembles de canaux physiques représentent des porteuses de fréquence (c₀ - c₄) et les canaux physiques représentent des tranches de temps.

11. station, d'accès radio selon l'une quelconque des revendications 1 à 9, dans laquelle en outre la station d'accès radio opère selon la technique d'accès CDMA ou WCDMA, moyennant quoi les ensembles de canaux physiques sont **caractérisés par** des codes d'embrouillage et les canaux physiques sont **caractérisés par** des codes de découpage en canaux.

12. Station d'accès radio selon l'une quelconque des revendications 1 à 11, comprenant en outre un moyen pour restreindre l'utilisation de terminaux mobiles dans des zones couvertes par la station d'accès radio.

13. Station d'accès radio selon la revendication 12, dans laquelle en outre le moyen pour restreindre l'utilisation comprend un moyen de notification envoyant une notification à un terminal mobile lors de l'entrée de ce dernier dans une zone d'utilisation limités.

14. Station d'accès radio selon la revendication 12 ou 13, laquelle en outre le moyen pour restreindre l'utilisation comprend un moyen de déconnexion pour déconnecter les communications avec un terminal mobile situé dans une zone d'utilisation limitée.

15. Station d'accès radio selon la revendication 12, 13 ou 14, dans laquelle en outre le moyen pour restreindre l'utilisation comprend un moyen d'autorisation demandant une vérification d'autorisation d'un terminal mobile situé ou entrant dans une zone d'utilisation limitée.

16. Réseau d'accès radio, comprenant :
un contrôleur de station d'accès radio (60) ;
une station d'accès radio (8), ayant accès à m ensembles de canaux physiques (c₀ - c₄), m étant un nombre entier supérieur à 1 ; et
un réseau d'antennes (24) comprenant n antennes (14) connectées à la station d'accès radio (8), n étant un nombre entier supérieur à 1 ;
dans lequel la station d'accès radio (8) comporte un contrôleur de réseau (20) pour commander le réseau d'antennes, comprenant un translateur de canal (30) associant mutuellement des canaux utilisés pour communiquer avec un contrôleur de station d'accès radio (60) à des canaux physiques des ensembles de canaux physiques (c₀ - c₄) utilisés par les n antennes (14) ;
le contrôleur de réseau (20) étant agencé de manière à commander des opérations de transfert intercellulaire entre un premier ensemble de canaux physiques des m ensembles de canaux physiques (c₀ - c₄) et un second ensemble de canaux physiques des m ensembles de canaux physiques (c₀ - c₄) ;
**caractérisé en ce que** le contrôleur de réseau (20) comprend en outre un moyen de détermination de position (38) pour définir la position de la station mobile (6) en accédant à des associations dans le translateur de canal (30) et en ayant accès à des données de position précises des antennes (14).

17. Réseau d'accès radio selon la revendication 16, dans lequel en outre :
le contrôleur de réseau (20) est agencé de manière à fournir des signaux de commande associés à une première antenne sur le premier ensemble de canaux physiques destiné à la première antenne des n antennes (14) ; et
le contrôleur de réseau (20) est agencé de manière à fournir des signaux de commande associés à une seconde antenne, différente de la première antenne, sur le second ensemble de canaux physiques destiné à la seconde antenne des n antennes (14).

18. Réseau d'accès radio selon la revendication 16 ou 17, dans lequel en outre le contrôleur de réseau (20) est agencé de manière à mettre fin à des informations associées aux antennes individuelles, et à communiquer uniquement les informations associées à la station d'accès radio dans son ensemble au contrôleur de station d'accès radio (60), moyennant quoi un terminal mobile connecté (6) perçoit les n antennes (14) comme des antennes de cellules distinctes (7), tandis que le contrôleur de station d'accès radio (60) perçoit les n antennes (14) comme des antennes d'une cellule unique (4).

19. Réseau d'accès radio selon l'une quelconque des revendications 16 à 18, dans lequel en outre le contrôleur de réseau (20) comprend un moyen d'estimation de position sur la base de listes de voisinage (100 ; 110).

20. Réseau d'accès radio selon la revendication 19, dans lequel en outre le contrôleur de réseau (20) comprend un moyen pour modifier des listes de voisinage (100 ; 110) de terminaux mobiles connectés (6) à acheminer vers le contrôleur de station d'accès radio (60).

21. Réseau d'accès radio selon l'une quelconque des revendications 16 à 20, dans lequel en outre les n antennes (14) sont connectées par un câble d'antenne commun (17).

22. Réseau d'accès radio selon l'une quelconque des revendications 16 à 21, comprenant en outre des sélecteurs de signaux (28) au niveau de chacune des n antennes (14) et dans lequel le contrôleur de réseau (20) comprend un injecteur de signaux de commande de diffusion (26, 33).

23. Réseau d'accès radio selon l'une quelconque des revendications 16 à 20, dans lequel en outre au moins l'une des n antennes (14) est connectée par un câble d'antenne individuel.

24. Réseau d'accès radio selon l'une quelconque des revendications 16 à 23, dans lequel en outre la station d'accès radio est sélectionné dans la liste ci-dessous comportent :
une station de base ;
un point d'accès ; et
une station « Noeud B ».

25. Réseau d'accès radio selon l'une quelconque des revendications 16 à 23, dans lequel en outre le contrôleur de station d'accès radio est sélectionné dans la liste ci-dessous comportant :
un contrôleur de station de base ; et
un contrôleur de réseau radio.

26. Réseau d'accès radio selon l'une quelconque des revendications 16 à 25, dans lequel en outre le réseau d'accès radio opère selon le système GSM, moyennant quoi les ensembles de canaux physiques représentent des porteuses de fréquence (c₀ - c₄) et les canaux physiques représentent des tranches de temps.

27. Réseau d'accès radio selon l'une quelconque des revendications 6 à 25, dans lequel en outre le réseau d'accès radio opère selon la technique d'accès CDMA ou WCDMA, moyennant quoi les ensembles de canaux physiques sont **caractérisés par** des codes d'embrouillage et les canaux physiques sont **caractérisés par** des codes de découpage en canaux.

28. Procédé destiné à gérer une partie d'un réseau de communication mobile, en mettant en oeuvre les étapes ci-dessous consistant à :
fournir des signaux de commande associés à une première antenne sur un premier ensemble de canaux physiques destiné à une première antenne ;
fournir des signaux de commande associés à une seconde antenne, différente de la première antenne, sur un second ensemble de canaux physiques destiné à une seconde antenne ;
associer mutuellement des canaux utilisés pour communiquer avec un contrôleur de station d'accès radio (60) à des canaux physiques des ensembles de canaux physiques (c₀ - c₄) utilisés par les n antennes (14) en vue de communiquer avec une station mobile (6) ; et mettre en oeuvre un transfert intercellulaire d'une communication entre des ensembles de canaux physiques (c₀ - c₄) de deux antennes (14) commandées par une station d'accès radio (8) ;
le procédé étant **caractérisé par** l'étape supplémentaire consistant à définir la position de la station mobile (6) en accédant à des associations de canaux et en ayant accès à des données de position précises des antennes (14).

29. Procédé selon la revendication 28, dans lequel en outre le transfert intercellulaire est mis en oeuvre de manière transparente relativement à un contrôleur de station d'accès radio (60) commandant la station d'accès radio (8).

30. Procédé selon l'une quelconque des revendications 28 à 29, comprenant en outre l'étape ci-dessous consistant à :
associer de manière adaptative des canaux physiques d'antennes à des canaux de communications destinés à être utilisés entre la station d'accès radio (8) et le contrôleur de station d'accès radio (60).

31. Procédé selon l'une quelconque des revendications 28 à 30, comprenant en outre l'étape ci-dessous consistant à :
estimer, au niveau de la station d'accès radio (8), une position d'un terminal mobile (6) connecté à une antenne.

32. Procédé selon la revendication 31, dans lequel en outre l'étape d'estimation est basée sur un contenu d'une liste de voisinage.

33. Procédé selon la revendication 31 ou 32, comprenant en outre l'étape ci-dessous consistant à :
restreindre l'utilisation d'un terminal mobile dans des zones couvertes par la station d'accès radio.

34. Procédé selon la revendication 33, dans lequel en outre l'étape consistant à restreindre l'utilisation comprend l'étape consistant à signaler à un terminal mobile lorsqu'il entre dans une zone d'utilisation limitée.

35. Procédé selon la revendications 33 ou 34, dans lequel en outre l'étape consistant à restreindre l'utilisation comprend l'étape consistant à déconnecter les communications avec un terminal mobile situé dans une zone d'utilisation limitée.

36. Procédé selon l'une quelconque des revendications 33 à 35, dans lequel en outre l'étape consistant à restreindre l'utilisation comprend l'étape consistant à demander une verification d'autorisation d'un terminal mobile situé ou entrant dans une zone d'utilisation limitée.
